# EUROPÄISCHE PATENTSCHRIFT

(11) **EP 1 110 987 B1**
(45) Veröffentlichungstag und Bekanntmachung des Hinweises auf die Patenterteilung: **18.08.2004**
(21) Anmeldenummer: 00127740.9
(22) Anmeldetag: 19.12.2000
(51) Int. Cl.: C08G 18/80, C08G 18/08, C08G 18/42, C09D 175/04

(54) **Wässriges Überzugsmittel**
Aqueous coating
Revêtement aqueux

(30) Priorität: 23.12.1999 AT 217299
(43) Veröffentlichungstag der Anmeldung: 27.06.2001
(73) Patentinhaber: Surface Specialties Austria GmbH, 8402 Werndorf (AT)
(72) Erfinder: Dworak, Gert, Dr., 8010 Graz (AT); Staritzbichler, Werner, Dr., 8046 Graz (AT)
(74) Vertreter: Deckers, Hellmuth, Dr.

(56) Entgegenhaltungen:
- EP-A- 0 942 023
- US-A- 5 494 956
- US-A- 5 521 247

## Beschreibung

Die Erfindung betrifft ein wäßriges Überzugsmittel, das vor allem zur Herstellung von Beschichtungen auf Automobilteilen geeignet ist. Die so beschichteten Teile, insbesondere solche, bei denen das hier beschriebene Überzugsmittel als Füllerschicht eingesetzt wird, zeichnen sich durch hohe Steinschlagfestigkeit aus.

In der DE-A 39 18 510 werden konventionelle Einbrennfüller (auf Basis von in organischen Lösungsmitteln gelösten) Polyestern und blockierten Isocyanaten beschrieben. Es bestand das Bedürfnis, gleichwertige Beschichtungen mit wäßrigen Systemen zu realisieren.

In der EP-A 0 249 727 werden wäßrige Füller-Beschichtungsmittel auf Basis von Phosphorsäure-modifizierten Epoxidharzen, wasserverdünnbaren Polyestern wie aus der AT-B 328 587 bekannt, und wasserverdünnbaren Melaminharzen beschrieben. Die DE-A 40 00 748 betrifft wäßrige Füller-Beschichtungsmittel aus wasserverdünnbaren Hydroxylgruppen-haltigen Polyurethanharzen, die gegebenenfalls noch andere Bindemittel zugemischt enthalten können, und wäßrigen Aminharzen als Härter. Mischungen aus wasserverdünnbaren Polyurethanharzen, wasserverdünnbaren, mit Epoxidharz modifizierten Polyestem und gegebenenfalls wasserverdünnbaren Aminoplastharzen sind aus der DE-A 38 13 866 bekannt. Andere wäßrige Füller-Beschichtungsmittel auf Basis von Carboxylgruppen-haltigen Polyestern oder Acrylcopolymerisaten und wasserlöslichen blockierten Isocyanat-Präpolymeren, gegebenenfalls in Kombination mit wasserverdünnbaren Aminharzen werden in der DE-A 38 05 629 beschrieben. In der EP 0 594 685 wird die Verwendung von Kondensationsprodukten von Carboxylgruppen-haltigen Polyurethanharzen und Hydroxylgruppen-haltigen, gegebenenfalls urethanmodifizierten Polyesterharzen gemeinsam mit wasserunlöslichen blockierten Isocyanaten zur Herstellung von Einbrennlacken beschrieben. Eine Verbesserung dieser Formulierung mit geringerer Empfindlichkeit gegen das sog. Überbrennen ist aus der EP-A 0 548 873 bekannt, wobei die Verbesserung durch Zusatz eines wasserlöslichen Aminharzes als Vernetzer erreicht wird.

Alle diese bekannten Systeme sind vor allem bei Glanz und Steinschlagfestigkeit (insbesondere bei tiefen Temperaturen) noch verbesserungsbedürftig.

Es wurde nun gefunden, daß durch Verwendung einer Kombination von wasserunlöslichen blockierten Isocyanaten und wasserlöslichen oder wasserdispergierbaren (im Folgenden gemeinsam als "hydrophil" oder "hydrophilisiert" bezeichnet) blockierten Isocyanaten gemeinsam mit Kondensationsprodukten von Hydroxylgruppen-haltigen und Carboxylgruppen-haltigen Harzen Beschichtungsmittel zugänglich werden, die gegenüber den bekannten Systemen nach dem Einbrennen besseren Glanz und verbesserte Steinschlagfestigkeit auch bei niedrigen Temperaturen aufweisen.

Gegenstand der Erfindung ist daher ein wäßriges Beschichtungsmittel, enthaltend
- ein Kondensationsprodukt **A** aus einem Carboxylgruppen aufweisenden Harz **A1** und einem Hydroxylgruppen aufweisenden Harz **A2**, wobei bevorzugt **A1** eine Säurezahl von 100 bis 230 mg/g, insbesondere von 120 bis 160 mg/g, und **A2** bevorzugt eine Hydroxylzahl von 50 bis 500 mg/g, insbesondere von 60 bis 350 mg/g, aufweist,
- einem erst bei erhöhter Temperatur von mindestens 80 °C wirksam werdenden Härter **C**, der ein wasserunlösliches blockiertes Isocyanat **C1** und ein hydrophiles blockiertes Isocyanat **C2** enthält, wobei mindestens 20 % der Masse des Härters **C** wasserunlöslich sein müssen.

Als wasserunlöslich werden solche blockierten Isocyanate bezeichnet, von denen nach Erreichen des Gleichgewichts bei 20 °C mit einer Menge an Wasser, deren Masse das zehnfache von der des blockierten Isocyanats beträgt, weniger als 5 % der eingesetzten Masse des blockierten Isocyanats in der wäßrigen Phase gelöst sind. Als wasserlöslich oder wasserdispergierbar werden solche blockierten Isocyanate bezeichnet, von denen nach Erreichen des Gleichgewichts mit einer Menge an Wasser, deren Masse das zehnfache von der des blockierten Isocyanats beträgt, weniger als 5 % der eingesetzten Masse des blockierten Isocyanats nicht in der wäßrigen Phase gelöst oder dispergiert sind.

Die Säurezahl ist gemäß DIN 53 402 definiert als der Quotient derjenigen Masse ***m***_{KOH} an Kaliumhydroxid, die erforderlich ist, um eine zu untersuchende Probe zu neutralisieren, und der Masse ***m***_{B} dieser Probe (Masse des Feststoffes in der Probe bei Lösungen oder Dispersionen); ihre übliche Einheit ist "mg/g". Die Hydroxylzahl ist gemäß DIN 53 240 definiert als der Quotient derjenigen Masse ***m***_{KOH} an Kaliumhydroxid, die genausoviel Hydroxylgruppen aufweist wie eine zu untersuchende Probe, und der Masse ***m***_{B} dieser Probe (Masse des Feststoffes in der Probe bei Lösungen oder Dispersionen); ihre übliche Einheit ist "mg/g".

Die früher so bezeichnete "Grenzviskositätszahl", nach DIN 1342, Teil 2.4, "Staudinger-Index" ***J***_{g} genannt, ist der Grenzwert der Staudinger-Funktion ***J***ᵥ bei abnehmender Konzentration und Schubspannung, wobei ***J***ᵥ die auf die Massenkonzentration β_{B}' = ***m***_{B} / ***V*** des gelösten Stoffes B (mit der Masse ***m***_{B} des Stoffes im Volumen ***V*** der Lösung) bezogene relative Viskositätsänderung ist, also ***J***ᵥ = (ηᵣ - 1)/β_{B}. Dabei bedeutet ηᵣ - 1 die relative Viskositätsänderung, gemäß ηᵣ - 1 = (η - ηₛ)/ηₛ. Die relative Viskosität ηᵣ ist der Quotient aus der Viskosität η der untersuchten Lösung und der Viskosität ηₛ des reinen Lösungsmittels. (Die physikalische Bedeutung des Staudinger-Index ist die eines spezifischen hydrodynamischen Volumens des solvatisierten Polymerknäuels bei unendlicher Verdünnung und im Ruhezustand.) Die üblicherweise für ***J*** verwendete Einheit ist "cm³/g"; früher häufig "dl/g".

Das Kondensationsprodukt **A** hat bevorzugt eine Säurezahl von 25 bis 75 mg/g, insbesondere 30 bis 50 mg/g. Sein Staudinger- Index ("Grenzviskositätszahl") beträgt üblicherweise 10 bis 20 cm³/g, insbesondere 12 bis 19 cm³/g, und besonders bevorzugt 13 bis 18 cm³/g. Zu seiner Herstellung werden die Komponenten **A1** und **A2** bevorzugt in einem Massenverhältnis von 10 zu 90 bis 80 zu 20, insbesondere von 15 zu 85 bis 40 zu 60, eingesetzt.

Die Harze **A1** mit Carboxylgruppen werden bevorzugt ausgewählt aus Polyesterharzen **A11**, Polyurethanharzen **A12**, den sogenannten Maleinatölen **A13**, mit ungesättigten Carbonsäuren gepfropften Fettsäuren und Fettsäuregemischen **A14** sowie den Acrylatharzen **A15**. Bevorzugt ist die Säurezahl der Harze **A1** 100 bis 230 mg/g, insbesondere von 70 bis 160 mg/g. Ihr Staudinger-Index, gemessen in Dimethylformamid als Lösungsmittel bei 20 °C, beträgt im allgemeinen ca. 4,0 bis 12 cm³/g, bevorzugt 7 bis 11 cm³/g.

Geeignete Polyesterharze **A11** lassen sich in bekannter Weise herstellen aus Polyolen **A111** und Polycarbonsäuren **A112**, wobei ein Teil, bevorzugt bis zu 25 %, der Stoffmenge der Polyole und Polycarbonsäuren auch durch Hydroxycarbonsäuren **A113** ersetzt sein kann. Durch geeignete Wahl von Art und Menge der Edukte **A111** und **A112** wird sichergestellt, daß der resultierende Polyester eine ausreichende Zahl von Säuregruppen, entsprechend der oben angegebenen Säurezahl, hat. Die Polyole **A111** werden bevorzugt ausgewählt aus den aliphatischen und cycloaliphatischen Alkoholen mit 2 bis 10 Kohlenstoffatomen und im Mittel mindestens zwei Hydroxylgruppen pro Molekül, insbesondere geeignet sind Glykol, 1,2- und 1,3-Propandiol, 1,4-Butandiol, 1,6-Hexandiol, Neopentylglykol, Di- und Triäthylenglykol, Di- und Tripropylenglykol, Glycerin, Trimethylolpropan und Trimethyloläthan. Geeignete Polycarbonsäuren **A112** sind aliphatische, cycloaliphatische und aromatische Polycarbonsäuren wie Adipinsäure, Bernsteinsäure, Cyclohexandicarbonsäure, Phthalsäure, Iso- und Terephthalsäure, Trimellithsäure und Trimesinsäure, Benzophenontetracarbonsäure. Dabei lassen sich auch Verbindungen einsetzen, die sowohl Carbonsäure- als auch Sulfonsäuregruppen aufweisen, wie zum Beispiel Sulfoisophthalsäure.

Geeignete Polyurethanharze **A12** lassen sich darstellen durch Umsetzung von aliphatischen Polyolen **A121** wie unter **A111** definiert, Hydroxyalkancarbonsäuren **A122** mit mindestens einer, bevorzugt zwei, Hydroxylgruppen und einer unter Veresterungsbedingungen im Vergleich zu Adipinsäure weniger reaktiven Carboxylgruppe, bevorzugt eingesetzt werden Dihydroxymonocarbonsäuren ausgewählt aus Dimethylolessigsäure, Dimethylolbuttersäure und Dimethylolpropionsäure, oligomeren oder polymeren Verbindungen **A125** mit im Mittel mindestens zwei Hydroxylgruppen pro Molekül, die ausgewählt werden können aus Polyätherpolyolen **A1251**, Polyesterpolyolen **A1252**, Polycarbonatpolyolen **A1253**, gesättigten und ungesättigten Dihydroxyaliphaten **A1254**, die durch Oligomerisieren oder Polymerisieren von Dienen mit 4 bis 12 Kohlenstoffatomen, insbesondere Butadien, Isopren und Dimethylbutadien und anschließendes Funktionalisieren in bekannter Weise erhältlich sind, sowie mehrfunktionellen Isocyanaten **A123**, bevorzugt ausgewählt aus aromatischen, cycloaliphatischen sowie linearen und verzweigten aliphatischen difunktionellen Isocyanaten wie Toluylendiisocyanat, Bis(4-isocyanatophenyl)methan, Tetramethylxylylendiisocyanat, Isophorondiisocyanat, Bis(4-isocyanatocyclohexyl)methan, Hexamethylendiisocyanat und 1,6-Diisocyanato-3,3,5- und -3,5,5-trimethylhexan.

Besonders bevorzugt werden solche Polyurethanharze **A12**, die durch Umsetzung einer Mischung von einem oder mehreren Polyolen **A121** mit einer Hydroxyalkancarbonsäure **A122** und mindestens einem mehrfunktionellen Isocyanat **A123**, das mit Monohydroxyverbindungen **A124** ausgewählt aus Polyalkylenglykol-Monoalkyläthern HO-(R¹-O)ₙ-R², wobei R¹ ein linearer oder verzweigter Alkylenrest mit 2 bis 6, bevorzugt 2 bis 4 Kohlenstoffatomen ist, und R² eine Alkylgruppe mit 1 bis 8, bevorzugt 2 bis 6 Kohlenstoffatomen ist, und Oximen von aliphatischen Ketonen mit 3 bis 9 Kohlenstoffatomen zumindest teilweise, üblicherweise zu mehr als 20 %, bevorzugt zu mehr als 35 %, und insbesondere zu 50 % und mehr blockiert ist. Der Blockierungsgrad wird hier angegeben als Anteil der blockierten Isocyanatgruppen, bezogen auf die in dem Isocyanat **A123** insgesamt vorhandenen (blockierten und unblockierten) Isocyanatgruppen. Es ist weiter bevorzugt, die Polyurethanharze **A12** derart herzustellen, daß eine Mischung eines mehrfunktionellen Isocyanats und eines auf die oben beschriebene Weise blockierten mehrfunktionellen Isocyanats mit der Hydroxyalkancarbonsäure **A122** und den Polyolen **A121** und **A125** umgesetzt werden, wobei die Mischungsverhältnisse so gewählt werden, daß in jedem Molekül des Polyurethans **A12** im Mittel eine oder mehr als eine endständige blockierte Isocyanatgruppe vorliegt.

Als "Maleinatöl" **A13** werden Umsetzungsprodukte von (trocknenden) Ölen **A131** und olefinisch ungesättigten Carbonsäuren **A132**, besonders Dicarbonsäuren bezeichnet. Als Öle **A131** werden bevorzugt trocknende und halbtrocknende Öle wie Leinöl, Tallöl, Rapsöl, Sonnenblumenöl und Baumwollsaatöl eingesetzt, mit Jodzahlen von ca. 100 bis ca. 180. Die ungesättigten Carbonsäuren **A132** werden so ausgewählt, daß sie unter den üblichen Bedingungen radikalisch (nach Zusatz von Initiatoren oder nach Erwärmen) auf die vorgelegten Öle mit einer Ausbeute (Anteil der nach der Reaktion mit dem Öl verbundenen ungesättigten Carbonsäuren, bezogen auf die zur Reaktion eingesetzte Menge) von über 50 % pfropfen. Besonders geeignet ist Maleinsäure in Form ihres Anhydrids, ferner Tetrahydrophthalsäureanhydrid, Acryl- und Methacrylsäure, sowie Citracon-, Mesacon- und Itaconsäure.

Ebenfalls geeignete Harze **A14** sind mit den unter **A132** genannten ungesättigten Säuren gepfropfte Fettsäuren oder Fettsäuregemische **A141**, wobei die letzteren durch Verseifen von Fetten in technischen Mengen zugänglich sind. Die geeigneten Fettsäuren weisen mindestens eine olefinische Doppelbindung im Molekül auf, beispielhaft werden Ölsäure, Linol- und Linolensäure, Ricinolsäure und Elaidinsäure sowie die genannten technischen Gemische solcher Säuren aufgezählt.

Weitere geeignete Harze **A15** sind die durch Copolymerisation von olefinisch ungesättigten Carbonsäuren **A151** und anderen Vinyl- oder Acryl-Monomeren **A152** zugänglichen sauren Acrylatharze. Die Carbonsäuren sind die bereits unter **A132** genannten, ebenso noch Vinylessigsäure sowie Croton- und Isocrotonsäure und die Halbester von olefinisch ungesättigten Dicarbonsäuren wie z. B. Monomethylmaleinat und -fumarat. Geeignete Monomere **A152** sind die Alkylester von Acryl- und Methacrylsäure mit bevorzugt 1 bis 8 Kohlenstoffatomen in der Alkylgruppe, (Meth)Acrylnitril, Hydroxyalkyl(meth)acrylate mit 2 bis 6 Kohlenstoffatomen in der Alkylgruppe, Styrol, Vinyltoluol, sowie Vinylester von aliphatischen linearen und verzweigten Carbonsäuren mit 2 bis 15 Kohlenstoffatomen, insbesondere Vinylacetat und der Vinylester eines Gemisches von verzweigten aliphatischen Carbonsäuren mit im Mittel 9 bis 11 Kohlenstoffatomen. Vorteilhaft ist auch die Copolymerisation der unter **A151** und **A152** genannten Monomeren in Gegenwart von solchen Verbindungen **A153**, die mit den ungesättigten Carbonsäuren unter Addition und Bildung einer Carboxyl- oder Hydroxyl-funktionellen copolymerisierbaren Verbindung reagieren. Derartige Verbindungen sind beispielsweise Lactone **A1531**, die mit den Carbonsäuren **A151** unter Ringöffnung zu einer Carboxyl-funktionellen ungesättigten Verbindung reagieren, und Epoxide **A1532**, insbesondere Glycidylester von in α-Stellung verzweigten gesättigten aliphatischen Säuren mit 5 bis 12 Kohlenstoffatomen wie der Neodecansäure oder der Neopentansäure, die unter Addition mit der Säure **A151** zu einer copolymerisierbaren Verbindung mit einer Hydroxylgruppe reagieren. Dabei sind die Stoffmengen der eingesetzten Verbindungen so zu bemessen, daß die geforderte Säurezahl erreicht wird. Legt man diese Verbindung **A153** vor und führt die Polymerisation so durch, daß diese Verbindung als (alleiniges) Lösungsmittel verwendet wird, so erhält man lösungsmittelfreie Acrylatharze.

Als Hydroxylgruppen-haltige Harze **A2** sind insbesondere Polyester **A21**, Acrylatharze **A22**, Polyurethanharze **A23** sowie Epoxidharze **A24** geeignet. Die Hydroxylzahl der Harze **A2** beträgt im allgemeinen ca. 50 bis 500 mg/g, vorzugsweise ca. 60 bis 350 mg/g, und besonders bevorzugt 70 bis 300 mg/g. Ihr Staudinger-Index, gemessen bei 20 °C in Dimethylformamid als Lösungsmittel, beträgt bevorzugt 8 bis 13 cm³/g, insbesondere 9,5 bis 12 cm³/g.

Die Polyester **A21** werden wie die Komponente **A11** durch Polykondensation hergestellt; lediglich ist hier Art und Menge der Edukte so zu wählen, daß ein Überschuß an Hydroxylgruppen gegenüber den Säuregruppen besteht, wobei das Kondensationsprodukt die oben angegebene Hydroxylzahl aufweisen muß. Dies kann erreicht werden, indem mehrwertige Alkohole mit im Mittel mindestens zwei, bevorzugt mindestens 2,1 Hydroxylgruppen pro Molekül, mit Dicarbonsäuren oder einem Gemisch von Poly- und Monocarbonsäuren mit im Mittel maximal zwei, bevorzugt 1,5 bis 1,95 Säuregruppen pro Molekül eingesetzt werden. Eine andere Möglichkeit ist, eine entsprechenden Überschuß an Hydroxylkomponenten (Polyolen) **A211** gegenüber den Säuren **A212** einzusetzen. Die Polyole **A211** und die mehrfunktionellen Säuren **A212**, die in der Polykondensationsreaktion zu den Hydroxylgruppen-haltigen Polyestern **A21** umgesetzt werden, werden aus den gleichen Gruppen wie die Polyole **A111** und die Säuren **A112** ausgewählt. Es ist hier ebenso möglich, einen Teil der Polyole und Säuren durch Hydroxysäuren entsprechend **A113** zu ersetzen. Es wird dabei angestrebt, daß die Säurezahl der Komponente **A2** nicht über 20 mg/g, bevorzugt unter 18 mg/g, liegt. Die Säurezahl läßt sich beispielsweise dadurch herabsetzen, daß der fertig kondensierte Polyester **A21** mit einer geringen Menge einwertiger aliphatischer Alkohole **A114** unter Veresterungsbedingungen nachreagiert wird. Dabei ist die Menge an Alkoholen **A114** so zu bemessen, daß zwar die Säurezahl unter den Grenzwert abgesenkt wird, jedoch der Staudinger-Index nicht über die genannte untere Grenze absinkt. Geeignete aliphatische Alkohole sind beispielsweise n-Hexanol, 2-Äthylhexanol, Isodecylalkohol und Tridecylalkohol.

Die Hydroxylgruppen-haltigen Acrylatharze **A22** sind zugänglich durch üblicherweise radikalisch initiierte Copolymerisation von Hydroxylgruppen-haltigen Acrylmonomeren **A221** mit anderen Vinyl- oder Acrylmonomeren **A222** ohne solche Funktionalität. Beispiele für die Monomeren **A221** sind Ester der Acryl- und Methacrylsäure mit aliphatischen Polyolen, insbesondere Diolen mit 2 bis 10 Kohlenstoffatomen, wie Hydroxyäthyl- und Hydroxypropyl-(meth)acrylat. Beispiele für die Monomeren **A222** sind die Alkylester der (Meth)acrylsäure mit 1 bis 10 Kohlenstoffatomen in der Alkylgruppe wie Methyl-, Äthyl-, n-Butyl- und 2-Äthylhexyl(meth)acrylat, (Meth)Acrylnitril, Styrol, Vinyltoluol, Vinylester von aliphatischen Monocarbonsäuren mit 1 bis 10 Kohlenstoffatomen wie Vinylacetat und Vinylpropionat. Bevorzugt werden auch solche Acrylatharze, die nicht wie üblich in Lösung, sondern in einer Substanzpolymerisation hergestellt werden, wobei eine flüssige cyclische Verbindung (s. oben, **A153**) vorgelegt wird, die als Lösungsmittel bei der Polymerisationsreaktion fungiert, und die durch Ringöffnung bei der Reaktion mit einem der eingesetzten Monomeren eine copolymerisierbare Verbindung bildet. Beispiele für solche Verbindungen sind Glycidylester von in α-Stellung verzweigten aliphatischen Monocarbonsäuren, insbesondere der als Neopentansäure oder Neodecansäure kommerziell erhältlichen Säuren bzw. Säuregemische, weiter Lactone wie ε-Caprolacton oder δ-Valerolacton. Werden diese Glycidylester eingesetzt, so ist es erforderlich, mindestens einen zur Stoffmenge der Epoxidgruppen äquimolaren Anteil an Säuregruppen-haltigen Comonomeren, wie (Meth)Acrylsäure, bei der Polymerisation einzusetzen. Die Lactone können unter Ringöffnung sowohl mit Hydroxylgruppen-haltigen als auch mit Säuregruppen-haltigen Comonomeren eingesetzt werden.

Hydroxylgruppen-haltige Polyurethanharze **A23** sind in bekannter Weise zugänglich durch Addition von oligomeren oder polymeren Polyolen **A231**, ausgewählt aus Polyesterpolyolen, Polyätherpolyolen, Polycarbonatpolyolen und Polyolefinpolyolen, gegebenenfalls niedermolekularen aliphatischen Diolen oder Polyolen **A233** mit 2 bis 12 Kohlenstoffatomen, wie beispielsweise Äthylenglykol, 1,2- und 1,3-Propylenglykol, 1,4-Butandiol, 1,6-Hexandiol, Di- und Tri- Äthylen- bzw. Propylenglykol, Neopentylglykol, Trimethylolpropan, Pentaerythrit, und mehrfunktionellen Isocyanaten **A232**, wobei die letzteren in stöchiometrischem Unterschuß eingesetzt werden, derart daß die Anzahl der Hydroxylgruppen in der Reaktionsmischung größer ist als die der Isocyanatgruppen. Geeignete Polyole sind insbesondere oligomere und polymere Dihydroxyverbindungen mit einer zahlenmittleren molaren Masse Mₙ von ca. 200 bis 10000 g/mol. Durch Polyaddition mit mehrfunktionellen, insbesondere difunktionellen Isocyanaten werden sie bis zu dem angestrebten Wert für den Staudinger-Index von mindestens 8 cm³/g, vorzugsweise mindestens 9,5 cm³/g aufgebaut.

Epoxidharze **A24**, die durch Reaktion von Epichlorhydrin mit aliphatischen oder aromatischen Diolen oder Polyolen, insbesondere Bisphenol A, Bisphenol F, Resorcin, Novolaken oder oligomeren Polyoxyalkylenglykolen mit 2 bis 4, bevorzugt 3 Kohlenstoffatomen in der Alkylengruppe, zugänglich sind, weisen je eingesetztem Epichlorhydrin-Molekül mindestens eine Hydroxylgruppe auf. Anstelle der Reaktion von Epichlorhydrin mit Diolen lassen sich die geeigneten Epoxidharze auch durch die sogenannte Advancement-Reaktion aus Diglycidyläthern von Diolen (wie den oben genannten) oder Diglycidylestern von zweibasigen organischen Säuren mit den genannten Diolen herstellen. Alle bekannten Epoxidharze lassen sich hier einsetzen, soweit sie der Bedingung für die Hydroxylzahl genügen.

Die Härter **C** enthalten eine Kombination von wasserunlöslichen blockierten Isocyanaten **C1** und hydrophilen blockierten Isocyanaten **C2**. Bevorzugt beträgt der Massenanteil der Komponente **C1** 20 bis 90 %, besonders bevorzugt 25 bis 70 %, bezogen auf die gesamte Masse des Härters. Der Massenanteil des hydrophilen blockierten Isocyanats **C2** beträgt bevorzugt 10 bis 80 %, insbesondere 15 bis 45 %.

Die blockierten Isocyanate **C1** sind zugänglich durch Umsetzung von mehrfunktionellen aromatischen, aliphatischen oder gemischt aromatisch-aliphatischen Isocyanaten mit als Blockierungsmittel bezeichneten gegenüber Isocyanat reaktiven und monofunktionellen Verbindungen, wobei diese Reaktionsprodukte bei erhöhter Temperatur, d. i. oberhalb von 120 °C, bevorzugt bereits oberhalb von 100 °C, und in bestimmten Fällen bereits ab 80 °C wieder in ihre Edukte, Isocyanat und Blockierungsmittel, gespalten werden. Beim Härtungsvorgang wird das Blockierungsmittel frei und kann aus dem noch unvollständig gehärteten Lackfilm entweichen. Bevorzugt werden blockierte Isocyanate, die in bekannter Weise zugänglich sind aus Diisocyanaten wie Toluylendiisocyanat, Isophorondiisocyanat, Bis(4-isocyanatophenyl)methan, 1,6-Diisocyanatohexan, Tetramethylxylylendiisocyanat sowie den aus diesen gebildeten Allophanaten, Biureten oder Uretdionen, und üblichen Blockierungsmitteln. Dies sind beispielsweise lineare oder verzweigte aliphatische Alkohole mit 3 bis 20 Kohlenstoffatomen, bevorzugt 2-Äthylhexanol; Phenole wie Phenol selbst; Glykol-Monoester, wobei die Glykole monomere oder oligomere Alkylenglykole wie Glykol selbst, 1,2- und 1,3-Propandiol, 1,4-Butandiol, Di- und Triäthylenglykol, Di- und Tripropylenglykol sein können, und die Säure ausgewählt ist aus aliphatischen Monocarbonsäuren mit 1 bis 10 Kohlenstoffatomen, bevorzugt Essigsäure; Glykolmonoäther, wobei die Glykole den oben genannten entsprechen und die Verätherungskomponente ausgewählt ist aus den aliphatischen niederen Alkoholen mit 1 bis 8 Kohlenstoffatomen, bevorzugt Butylglykol; oder Ketoxime von aliphatischen Ketonen mit 3 bis 10 Kohlenstoffatomen, wie beispielsweise Butanonoxim. Besonders bevorzugt ist der Einsatz von 3,5-Dimethylpyrazol als Blockierungsmittel, da es nicht toxisch ist und auch bei Temperaturen von 180 °C und darüber nicht vergilbt. Die Blockierungsmittel werden in üblicher Weise so gewählt, daß die Abspaltungstemperatur zwischen 80 und 180 °C liegt. Besonders bevorzugt werden blockierte Isocyanate auf Basis von Isophorondiisocyanat und 1,6-Diisocyanatohexan.

Die hydrophilen blockierten Isocyanate **C2**, die in untergeordneter Menge eingesetzt werden können, sind unter anderem aus den folgenden Dokumenten bekannt:

In der EP-A 0 424 697 werden hydrophile blockierte Isocyanate beschrieben, die durch Reaktion aus einem Carboxylgruppen-haltigen Polyätherpolyol, einem Diisocyanat und einem Blockierungsmittel zugänglich sind. Diese Isocyanate werden zur Imprägnierung von Fasern und anschließende Herstellung von flächigen Gebilden hieraus eingesetzt.

In der EP-A 0 524 511 ist ein Verfahren beschrieben, wäßrige Dispersionen von blockierten Isocyanaten herzustellen, indem durch kationische, anionische oder nichtionische Strukturen hydrophilisierte Isocyanate in wäßriger Dispersion mit Blockierungsmitteln umgesetzt werden.

In der EP-A 0 576 952 werden wasserlösliche bzw. wasserdispergierbare Gemische blockierter Isocyanate beschrieben, die erhalten werden durch Umsetzung von Diisocyanaten, einem monofunktionellen Blockierungsmittel für Isocyanate, einer Hydroxycarbonsäure, einer Polyolkomponente bestehend aus einem zwei- bis sechswertigen Alkohol mit einer molaren Masse von 62 bis 182 g/mol, und einer Polyesterdiol-Komponente mit einer molaren Masse von 350 bis 950 g/mol.

In der EP-A 0 012 348 wird ein Verfahren zur Herstellung von wasserdispergierbaren oder wasserlöslichen blockierten Polyisocyanaten beschrieben, wobei ein zumindest zur Hälfte blockiertes mehrfunktionelles Isocyanat mit einem Aminsulfonat oder der entsprechenden Säure umgesetzt wird.

In der EP-A 0 566 953 werden wasserlösliche oder wasserdispergierbare blockierte Polyisocyanate beschrieben, die aus einem Isocyanatgemisch mit einer mittleren Isocyanat-Funktionalität von 2,5 bis 3,5, einem Blockierungsmittel und einer aliphatischen Monohydroxycarbonsäure herstellbar sind.

In der DE-A 44 13 059 sind wasserlösliche blockierte Polyisocyanate beschrieben, die eingebaute Aminogruppen enthalten, die durch Neutralisation mit Säuren in Ammoniumsalzgruppen überführbar sind und so das Vernetzungsmittel hydrophil machen.

In der EP-A 0 486 881 wird ein wasserverdünnbares mehrfunktionelles Polyisocyanat beschrieben, das freie Isocyanatgruppen aufweist. Durch die Gegenwart dieser Gruppen wird die Lagerstabilität solcher Beschichtungsmittel herabgesetzt, die diese Vernetzungsmittel enthalten.

Die hydrophil modifizierten (d. i. wasserlöslichen oder wasserdispergierbaren) blockierten Isocyanate **C2** werden erhalten durch Umsetzung von teilblockierten mehrfunktionellen Isocyanaten mit hydrophilisierenden Verbindungen bis zum vollständigen oder nahezu vollständigen Verbrach der Isocyanatgruppen. Diese hydrophilisierenden Verbindungen werden ausgewählt aus anionogenen Verbindungen wie organischen Carbon-, Sulfon- oder Phosphonsäuren, die mindestens eine gegenüber Isocyanaten reaktive Gruppe enthalten, ausgewählt bevorzugt aus Hydroxyl-, Amino-, Hydrazin- und Mercaptogruppen, insbesondere Bishydroxyalkylcarbonsäuren wie die Dimethylolpropionsäure, wobei deren Reaktionsprodukte mit Isocyanaten durch Zusatz von Alkalien in die entsprechenden Anionen überführt werden können, sowie aus kationogenen Verbindungen, insbesondere organischen Aminen, die mindestens eine tertiäre Aminogruppe sowie mindestens eine der oben genannten gegenüber Isocyanaten reaktiven Gruppen enthalten, wobei die tertiäre Aminogruppe nach der Umsetzung mit dem Isocyanat durch Zusatz von Säuren in das entsprechende Ammonium-Kation überführt werden kann. Die dritte Möglichkeit der Hydrophilisierung ist die Umsetzung der teilblockierten Isocyanate mit nichtionischen hydrophilen Verbindungen, insbesondere solchen mit einem ausreichenden Anteil von Oxyäthylen-Gruppen, die auch bekanntermaßen gemeinsam mit Oxypropylengruppen in der betreffenden Verbindung vorliegen können.

Als zusätzliche weitere Härterkomponente kann ein wasserverdünnbares Aminoplastharz **C3** in einem Massenanteil von bis zu 20 %, bevorzugt 2 bis 15 %, insbesondere 4 bis 10 %, bezogen auf die Masse der gesamten Härter-Komponente eingesetzt werden. Die Menge des Aminoplastharzes **C3** und des hydrophilen blockierten Isocyanats **C2** muß so bemessen werden, daß die Summe der Massenanteile aller wasserverdünnbaren Härterkomponenten nicht 50 % übersteigt.

Das Aminoplastharz **C3** wird bevorzugt in teil- oder vollverätherter Form eingesetzt. Insbesondere geeignet sind Melaminharze wie Hexamethoxymethylmelamin, mit Butanol oder mit Mischungen aus Butanol und Methanol verätherte Typen, sowie die entsprechenden Benzoguanamin-, Caprinoguanamin- oder Acetoguanaminharze.

Die Harze **A** werden aus den Polyhydroxy-Komponenten **A1** und den Polycarboxyl-Komponenten **A2** unter Kondensationsbedingungen hergestellt, d. h. bei einer Temperatur von 80 bis 180 °C, bevorzugt zwischen 90 und 170 °C, vorzugsweise in Gegenwart von solchen Lösungsmitteln, die mit dem bei der Kondensation gebildeten Wasser Azeotrope bilden. Die Temperatur wird insbesondere so gewählt, daß sie ca. 10 bis 20 °C oberhalb der Abspaltungstemperatur des Blockierungsmittels des Isocyanats liegt. Die Kondensation wird soweit geführt, daß die Harze **A** Säurezahlen von ca. 25 bis ca. 75 mg/g aufweisen, der Staudinger-Index beträgt dann ca. 13,5 bis 18 cm³/g, bevorzugt 14,5 bis 16,5 cm³/g, jeweils gemessen in Dimethylformamid als Lösungsmittel bei 20 °C. Nach zumindest teilweiser Neutralisation der verbliebenen Carboxylgruppen (wobei vorzugsweise 10 bis 80 % der Carboxylgruppen, besonders bevorzugt 25 bis 70 % neutralisiert werden) sind die Harze **A** in Wasser dispergierbar. Während der Kondensation kann man beobachten, daß die anfänglich trübe Reaktionsmasse sich klärt und eine homogene Phase bildet.

Die Zugabe des Härters erfolgt bevorzugt zu dem Harz **A** vor der Neutralisation und Dispergierung.

Die fertig formulierte Dispersion kann noch durch übliche Zusätze wie Pigmente, Korrosionsschutzmittel, Verlaufsmittel, Antiabsetzmittel, Haftverbesserer und Entschäumer dem vorgesehenen Anwendungszweck angepaßt werden.

Zur Formulierung von Füllern werden der Dispersion weiter organische oder anorganische Füllstoffe zugesetzt, wie Ruß, Titandioxid, feinteilige Kieselsäure, Silikate wie Kaolin oder Talkum, Kreiden, Schwerspat oder Eisenoxid-Pigmente; als organische Füllstoffe lassen sich gemahlene Thermoplasten wie Polyolefine, Polyester oder Polyamid einsetzen; bevorzugt sind auch durch Emulsionspolymerisation zugängliche, besonders auch vernetzte Polymerisate aus olefinisch ungesättigten Monomeren.

Die Füllerzusammensetzungen können ferner die üblichen Lösungsmittel, insbesondere wassermischbare Lösungsmittel, enthalten. Die Herstellung dieser Füller erfolgt üblicherweise durch Vermahlen der Füllstoffe und Pigmente mit einem Teil der Dispersion unter Zusatz von Dispergierhilfsmitteln, Entschäumern und anderer Additive in geeigneten Dispergieraggregaten wie einer Perlmühle. Dabei wird die Teilchengröße der Füllstoffe und Pigmente bevorzugt auf unter 15 µm vermindert. Zu dieser Zubereitung wird anschließend der Rest der Dispersion sowie gegebenenfalls weitere Additive entsprechend dem angestrebten Pigment-Bindemittel-Massen-Verhältnis von 0,5:1 bis zu 2,5:1 zugesetzt. In der Masse der Pigmente wird hier auch die Masse der Füllstoffe einbezogen.

Die fertige Zubereitung kann durch die üblichen Verfahren, wie Rollen, Spritzen oder Walzen auf das Substrat aufgetragen werden. Besonders bevorzugt werden Spritzauftragstechniken, wie Druckluft-Spritzen, Airless-Spritzen oder das sogenannte "ESTA-Hochrotationsspritzen". Nach einer kurzen Ablüftzeit bei Raumtemperatur oder erhöhter Temperatur bis zu ca. 80 °C wird die Schicht bei ca. 130 bis ca. 190 °C eingebrannt. Die Schichtdicke nach dem Einbrennen beträgt üblicherweise ca. 15 bis ca. 120 µm, bevorzugt zwischen 25 und 70 µm.

Die Kombination von wasserunlöslichen und hydrophilen Härterkomponenten bewirkt in der eingebrannten Schicht einen deutlich verbesserten Glanz. Obwohl die Füllerschicht in der Automobil-Lackierung mit mindestens einer weiteren Schicht (Uni-Decklack) bzw. zwei weiteren Schichten (bei Metallic-Lack: pigmentierte Lackschicht mit Farbpigment und Metalleffekt-Pigment sowie einer Klarlack-Schicht) überzogen wird, beeinflußt der deutlich verbesserte Glanz der Füllerschicht auch das Aussehen der fertigen Lackierung in wesentlichem Maß. Die Resistenz gegen Steinschlag wird in unerwarteter Weise ebenfalls verbessert.

### Beispiele

### 1 Herstellung des wasserunlöslichen Härters A (UH)

105 g Methyläthylketoxim und 0,1 g Dibutylzinndilaurat wurden unter Inertgaszufuhr auf 80 °C erwärmt und portionsweise mit 255 g ®Desmodur N 3390 (aliphatisches Isocyanat auf Basis von 1,6-Hexamethylendiisocyanat) versetzt. Die Reaktion verlief exotherm und wurde solange fortgeführt, bis alle Isocyanatgruppen umgesetzt waren. Die klare Lösung hatte einen Festkörper-Massenanteil von ca. 93 %, die Viskosität (58 g des Härters in 100 g Lösung in Butylglykol bei 23 °C, gemessen nach DIN EN ISO 3219) betrug ca. 400 mPa·s.

### 2 Herstellung der PH-Komponente B (PHES1)

79 g Dipropylenglykol, 87 g Hexandiol, 90 g Trimellithsäureanhydrid und 0,2 g Dibutylzinndilaurat wurden bei 180 °C bis zu einer Säurezahl von ca. 20 mg/g verestert. Die Viskosität am Ende der Reaktion betrug 500 mPa·s (gemessen nach DIN EN ISO 3219 bei 23 °C an einer Lösung von 55 g Harz in 100 g Lösung in Butylglykol).

### 3 Herstellung der PC -Komponente C (PCPU)

In ein Reaktionsgefäß mit Rühr-, Kühl- und Heizvorrichtung wurden 270 g Dimethylolpropionsäure, 134 g Dipropylenglykol, 180 g Äthylglykol, 367 g Diglykoldimethyläther und 183 g Methylisobutylketon eingewogen und auf 100 °C erwärmt. Bei 100 °C wurden unter Beachtung der exothermen Reaktion 696 g Toluylendiisocyanat zugetropft und die Temperatur solange gehalten, bis der Massenanteil an freien Isocyanatgruppen auf unter 0,1 % abgesunken war. Anschließend wurde mit 260 g Diglykoldimethyläther und 130 g Methylisobutylketon verdünnt. Man erhielt eine klare Harzlösung mit einer Viskosität von 200 mPa·s (gemessen bei 23 °C nach DIN EN ISO 3219 an einer Lösung von 46 g Harz in 100 g Lösung in Diglykoldimethyläther), einem Festkörper-Massenanteil von ca. 60 % und einer Säurezahl von 95 mg/g.

### 4 Herstellung der Carboxylkomponente D (PCLM)

300 g Leinöl wurden unter Stickstoffatmosphäre mit 100 g Maleinsäureanhydrid gemischt und in 4 Stunden auf 200 °C erhitzt. Die Temperatur von 200 °C wurde solange gehalten, bis kein freies Maleinsäureanhydrid mehr nachzuweisen war. Nach Abkühlen auf 85 °C wurde der Ansatz mit einer Mischung aus 30 g voll entsalztem (VE-) Wasser und 3 g Triäthylamin versetzt und solange bei der Temperatur gehalten, bis eine Säurezahl von 200 mg/g erreicht wurde. Anschließend wurde mit 85 g Methoxypropoxypropanol verdünnt. Die so erhaltene Harzlösung hatte einen Festkörper-Massenanteil von ca. 80 %.

### 5 Herstellung der PH-Komponente E (PHES2)

In einem geeigneten Reaktionsgefäß wurden 183 g Dipropylenglykol, 35 g Isononansäure, 68,5 g Pentaerythrit, 175 g Isophthalsäure und 0,5 g Dibutylzinndilaurat bei 220 °C bis zu einer Säurezahl von weniger als 5 mg/g verestert. Der Ansatz wurde bei 70 °C mit Methyläthylketon auf 65 % verdünnt und mit 60 g Toluylendüsocyanat versetzt. Die Temperatur wurde solange gehalten, bis keine freien NCO-Gruppen mehr nachweisbar waren.

### 6 Herstellung des Bindemittels 1

75 g der Komponente B (PHES1) und 25 g der Komponente C (PCPU) wurden gemischt und auf 150 °C aufgeheizt. Das vorhandene Lösungsmittel wurde durch Destillation unter vermindertem Druck weitgehend entfernt. Die Temperatur von 150 °C wurde gehalten, bis ein Säurezahlwert von 35 bis 40 mg/g und eine Viskosität von 600 mPa·s erreicht war (gemessen nach DIN EN ISO 3219 bei 23 °C an einer Lösung von 45 g Harz in 100 g Lösung in Butylglykol). Nach Kühlen auf 100 °C wurden dem Ansatz 25 g der Komponente A (wasserunlöslicher Härter) zugemischt. Anschließend wurde mit Dimethyläthanolamin neutralisiert und mit VE-Wasser auf einen Festkörper-Massenanteil von 35 % verdünnt.

### 7 Herstellung des Bindemittels 2

70 g der Komponente E (PHES2) und 30 g der Komponente D (PCLM) wurden gemischt. Bei einer Reaktionstemperatur von 100 °C wurde kondensiert, bis ein Säurezahlwert von 65 bis 70 mg/g erreicht war, die Viskosität (gemessen an einer Lösung von 40 g Harz in 100 g Lösung in Butylglykol nach DIN EN ISO 3219 bei 23 °C) betrug 450 mPa·s. Anschließend wurden 33 g der Komponente A (wasserunlöslicher Härter) zugemischt. Nach erfolgter Homogenisierung wurde mit Dimethyläthanolamin neutralisiert und mit VE-Wasser auf einen Festkörper-Massenanteil von 40 % eingestellt.

### Prüfung der erfindungsgemäßen Bindemittel als Automobilfüller

Die Bindemittel entsprechend den Beispielen 1 bis 2 wurden als Automobilfüller formuliert.

Die Zusammensetzung ist nachstehender Tabelle 1 zu entnehmen:

**Tabelle 1**

| (Masse in g) | | |
|---|---|---|
| | Füller 1 | Füller 2 |
| BM 1 gemäß Beispiel 6 | 242,9 | - |
| BM 2 gemäß Beispiel 7 | - | 200 |
| Hydrophil mod. blockiertes Isocyanat * | 16,7 | 33,3 |
| Wasserverdünnbares Aminoplastharz ⁺ | 5,3 | - |
| Titandioxid (Rutil) | 50 | 50 |
| Bariumsulfat | 40 | 40 |
| Mikrotalkum | 10 | 10 |
| Rußpigment | 0,2 | 0,2 |
| deionisiertes Wasser | 35 | 67 |

| | | |
|---|---|---|
| *: hydrophiles aliphatisches Polyisocyanat auf Basis von Hexamethylendiisocyanat (®Bayhydur 3100), mit VE-Wasser auf einen Festkörper-Massenanteil von 60 % verdünnt | | |
| +: mit Methanol teilveräthertes Melaminharz mit einem Polymerisationsgrad von ca. 2,3, wäßrige Lösung mit einem Festkörper-Massenanteil von 95 % | | |

Die Lacke wiesen einen Festkörper-Massenanteil von ca. 50 %, einen pH-Wert von ca. 8,0 (eingestellt mittels Dimethyläthanolamin) und eine Viskosität von ca. 120 mPa·s bei 20 ° C auf. Die Füller wurden mittels einer Druckluftpistole auf ein mit einer kathodisch abgeschiedenen Elektrotauchgrundierung (ca. 20 µm) beschichtetes, zinkphosphatiertes Stahlblech appliziert. Die Härtung der Füller erfolgte im Umluftofen, 20 Minuten bei 130 °C bzw. 150 °C bzw. 190 °C. In allen Fällen wurde eine Trockenfilmstärke von 35 ± 2 µm erreicht. Auf die Füllerschicht wurde ein handelsüblicher Alkydharz-Automobildecklack aufgebracht, welcher 30 Minuten bei 135 °C gehärtet wurde (Trockenfilm 35 ± 2 µm). Die Beständigkeitseigenschaften der Filme (Lösungsmittel-, Wasserfestigkeit) sowie die mechanischen Werte entsprachen bei allen Beschichtungen den Praxisanforderungen. Die Steinschlagfestigkeit wurde mit dem Steinschlag-Prüfgerät nach VDA (Fa. Erichsen, Modell 508) bei + 20 °C mit 1 kg Stahlschrot (kantig, 4 bis 5 mm mittlerer Durchmesser, Beschuß mit Druckluft 0,3 MPa (3 bar) ) geprüft. Dabei wurden die Decklackhaftung ( 0 = kein Abplatzen des Decklacks von Füller, 10 = keine Haftung zwischen Decklack und Füller) sowie die Anzahl der Durchschläge (0 = kein Durchschlag, 10 = sehr viele Durchschläge) in der üblichen Weise bewertet. Weiter wurde mit dem Steinschlagsimulationsgerät "SPLITT" (= Single Projectile Launching Impact-Tester) geprüft. Die letztere Methode ist in der Zeitschrift Farbe und Lack, Heft 8, Seite 646 bis 653 (1984), ausführlich beschrieben. Dabei betrug die Einbrenntemperatur für den Füller 160 °C, der Aufprallwinkel 5° und der Kugeldurchmesser 2 mm bei einer Masse von 0,5 g. Die Aufprallgeschwindigkeit wurde mit 180 km/h gewählt. Die Prüflinge wurden bei +20 °C und bei -20 °C getestet. Angegeben ist in der Tabelle 2 die (weitgehend kreisrunde) Schadensfläche in mm² und die an der Schadensstelle freiliegende Schicht (Blech - B, Grundierung - G, Füller - F).

Zur Bestimmung des Glanzes wurden die Lacke gemäß der Tabelle 1 mit einem Aufziehwürfel (Spaltweite 150 µm) auf einen Glasplatte aufgezogen und nach Ablüften bei Raumtemperatur (10 Minuten) bei 170 °C in einem Umluftofen gehärtet. Der Glanz wurde an diesen Platten gemäß der DIN 67 530 bei einem Winkel von 20° bestimmt.

Die Prüfergebnisse sind in der folgenden Tabelle 2 zusammengefaßt.

**Tabelle 2**

| Automobilfüller auf Basis von den Bindemitteln | BM 1 | BM 2 | Vergleich: Bsp. 4 aus EP-B 0 594 685 | Vergleich: Bsp. 2 aus EP-B 0 548 873 |
|---|---|---|---|---|
| VDA-Steinschlagtest | | | | |
| Decklackhaftung | 2 | 1 | 3 | 2 bis 3 |
| Durchschläge | 2 | 2 | 3 | 2 bis 3 |
| "SPLITT" bei + 20°C | 3 bis 4 / G/F | 3 bis 4 / G | 10 / B/G | 6 / G/F |
| "SPLITT" bei -20°C | 4 bis 6 / B/G | 2 bis 4 / G | 12 / B/G | 6 / G/F |
| Glanz in % | 56 | 60 | 55 | 50 |

Man erkennt, daß in beiden unterschiedlichen Tests die Steinschlagresistenz der erfindungsgemäßen Füller deutlich besser als die der Vergleichsfüller ist. Auch der Glanz ist bei dem erfindungsgemäßen Füller erheblich größer. Diese Verbesserung macht sich auch durch die darüberliegende Decklackschicht bemerkbar.

## Patentansprüche

1. Wäßriges Beschichtungsmittel, enthaltend
- ein Kondensationsprodukt **A** aus einem Carboxylgruppen aufweisenden Harz **A1** und einem Hydroxylgruppen aufweisenden Harz **A2**, und
- einen erst bei erhöhter Temperatur von mindestens 80 °C wirksam werdenden Härter **C**, **dadurch gekennzeichnet, daß** der Härter eine Mischung eines wasserunlöslichen blockierten Isocyanats **C1** und eines hydrophil modifizierten blockierten Isocyanats **C2** enthält.

2. Wäßriges Beschichtungsmittel nach Anspruch 1, **dadurch gekennzeichnet, daß** das Kondensationsprodukt **A** eine Säurezahl von 25 bis 75 mg/g aufweist.

3. Wäßriges Beschichtungsmittel nach Anspruch 1, **dadurch gekennzeichnet, daß** die Komponente **A1** eine Säurezahl von 100 bis 230 mg/g aufweist.

4. Wäßriges Beschichtungsmittel nach Anspruch 1, **dadurch gekennzeichnet, daß** die Komponente **A2** eine Hydroxylzahl von 50 bis 500 mg/g aufweist.

5. Wäßriges Beschichtungsmittel nach Anspruch 1, **dadurch gekennzeichnet, daß** der Härter **C** eine Mischung aus Massenanteilen von 95 bis 50 % eines wasserunlöslichen blockierten mehrfunktionellen Isocyanats und 5 bis 50 % eines hydrophilen blockierten Isocyanats ist.

6. Wäßriges Beschichtungsmittel nach Anspruch 1, **dadurch gekennzeichnet, daß** der Härter **C** zusätzlich einen Massenanteil von bis zu 20 % eines wasserverdünnbaren Aminoplastharzes **C3** enthält, und wobei der Massenanteil an wasserlöslichen oder wasserverdünnbaren Härtern **C2** und **C3** zusammen weniger als 50 % der Summe der Massen aller Härter **C1, C2** und **C3** ist.

7. Wäßriges Beschichtungsmittel nach Anspruch 6, **dadurch gekennzeichnet, daß** der Härter **C** einen Massenanteil von 2 bis weniger als 15 % eines wasserverdünnbaren Aminoplastharzes **C3** und einen Massenanteil über 35 bis 48 % eines hydrophilen blockierten Isocyanat **C2** enthält.

8. Wäßriges Beschichtungsmittel nach Anspruch 1, **dadurch gekennzeichnet, daß** die Carboxylgruppen der Harze **A** zu 60 bis 95 % neutralisiert sind.

9. Verfahren zur Herstellung von wäßrigen Beschichtungsmitteln nach Anspruch 1, **dadurch gekennzeichnet, daß** aus den Carboxylgruppen aufweisenden Harzen **A1** und den Hydroxylgruppen aufweisenden Harzen **A2** unter Polykondensationsbedingungen ein Harz **A** hergestellt wird, dessen verbliebene Carboxylgruppen zu 60 bis 95 % neutralisiert werden, das neutralisierte Harz **A** in Wasser dispergiert wird, und die wäßrige Dispersion vor der Applikation mit dem Härter **C** vermischt wird.

10. Verwendung von wäßrigen Beschichtungsmitteln nach Anspruch 1 zur Herstellung von Füllerschichten auf metallischen Substraten.

## Claims

1. A coating composition comprising
- a condensation product **A** of a carboxyl-containing resin **A1** and a hydroxyl-containing resin **A2,** and
- a curing agent **C** which becomes active only at elevated temperature of at least 80°C, wherein said curing agent comprises a mixture of a water-insoluble blocked isocyanate **C1** and a hydrophilically modified blocked isocyanate **C2.**

2. The coating composition as claimed in claim 1, wherein the component **A** has an acid number of from 25 to 75 mg/g.

3. The coating composition as claimed in claim 1, wherein the component **A1** has an acid number of from 100 to 230 mg/g.

4. The coating composition as claimed in claim 1, wherein the component **A2** has a hydroxyl number of from 50 to 500 mg/g.

5. The coating composition as claimed in claim 1, wherein the curing agent **C** is a mixture of mass fractions of from 95 to 50% of a water-insoluble blocked polyfunctional isocyanate and from 5 to 50% of a hydrophilic blocked isocyanate.

6. The coating composition as claimed in claim 1, wherein the curing agent **C** further comprises a mass fraction of up to 20% of a water-dilutable amino resin **C3**, and the mass fraction of water-soluble or water-dilutable curing agents **C2** and **C3** together is less than 50% of the sum of the masses of all curing agents **C1, C2** and **C3**.

7. The coating composition as claimed in claim 6, wherein the curing agent **C** comprises a mass fraction of from 2 to less than 15% of a water-dilutable amino resin **C3** and a mass fraction of over 35 to 48% of a hydrophilic blocked isocyanate **C2**.

8. The coating composition as claimed in claim 1, wherein from 60 to 95% of the carboxyl groups of the resins **A** have been neutralized.

9. A process for preparing a coating composition as claimed in claim 1, which comprises preparing from the carboxyl-containing resins **A1** and from the hydroxyl-containing resins **A2,** and the polycondensation conditions, a resin **A** whose remaining carboxyl groups are neutralized to the extent of from 60 to 95%, dispersing the neutralized resin **A** in water, and mixing the aqueous dispersion with the curing agent **C** prior to application.

10. The use of a coating composition as claimed in claim 1 to produce surfacer films on metallic substrates.

## Revendications

1. Composition aqueuse de revêtement, contenant
- un produit de condensation A obtenu à partir d'une résine A1 comportant des groupes carboxyle et d'une résine A2 comportant des groupes hydroxyle, et
- un durcisseur C, qui ne devient actif qu'à une température élevée, d'au moins 80°C, **caractérisée en ce que** le durcisseur contient un mélange d'un isocyanate bloqué C1 insoluble dans l'eau et d'un isocyanate bloqué C2 à modification hydrophile.

2. Composition aqueuse de revêtement selon la revendication 1, **caractérisée en ce que** le produit de condensation A a un indice d'acide de 25 à 75 mg/g.

3. Composition aqueuse de revêtement selon la revendication 1, **caractérisée en ce que** le composant A1 a un indice d'acide de 100 à 230 mg/g.

4. Composition aqueuse de revêtement selon la revendication 1, **caractérisée en ce que** le composant A2 a un indice d'hydroxyle de 50 à 500 mg/g.

5. Composition aqueuse de revêtement selon la revendication 1, **caractérisée en ce que** le durcisseur C est un mélange, en parties en masse, de 95 à 50 % d'un isocyanate multifonctionnel bloqué et insoluble dans l'eau et de 5 à 50 % d'un isocyanate bloqué hydrophile.

6. Composition aqueuse de revêtement selon la revendication 1, **caractérisée en ce que** le durcisseur C contient en outre une proportion en masse allant jusqu'à 20 % d'une résine aminoplaste C3 diluable à l'eau, la proportion en masse des durcisseurs C2 et C3 solubles dans l'eau ou diluables à l'eau, pris ensemble, étant inférieure à 50 % de la somme des masses de l'ensemble des durcisseurs C1, C2 et C3.

7. Composition aqueuse de revêtement selon la revendication 6, **caractérisée en ce que** le durcisseur C contient une proportion en masse de 2 à moins de 15 % d'une résine aminoplaste C3 diluable à l'eau et une proportion en masse supérieure à 35 et allant jusqu'à 48 % d'un isocyanate bloqué hydrophile C2.

8. Composition aqueuse de revêtement selon la revêtement 1, **caractérisée en ce que** les groupes carboxyle des résines A sont neutralisés à raison de 60 à 95 %.

9. Procédé de préparation de compositions aqueuses de revêtement selon la revendication 1, **caractérisé en ce que**, à partir des résines A1 comportant des groupes carboxyle et des résines A2 comportant des groupes hydroxyle, on prépare dans les conditions d'une polycondensation une résine A dont les groupes carboxyle restants sont neutralisés à raison de 60 à 95 %, on disperse dans de l'eau la résine A neutralisée, et, avant application, on mélange la dispersion aqueuse au durcisseur C.

10. Utilisation de compositions aqueuses de revêtement selon la revendication 1 pour préparer des couches d'apprêt garnissant des substrats métalliques.
